# EUROPEAN PATENT APPLICATION

(11) **EP 4 342 956 A1**
(43) Date of publication of application: **27.03.2024**
(21) Application number: 21940889.5
(22) Date of filing: 02.09.2021
(51) Int. Cl.: C09D 167/08, C08G 63/47

(54) **AQUEOUS COATING AGENT, ARTICLE, AND PRODUCTION METHOD OF ROSIN-MODIFIED POLYESTER RESIN**

(30) Priority: 17.05.2021 JP 2021083129
(71) Applicant: Harima Chemicals, Incorporated, Kakogawa-shi, Hyogo 675-0019 (JP)
(72) Inventor: ZILLI, Dario, 1520 Kallo (BE); MATSUSHIMA, Hironori, 1520 Kallo (BE); AUDENAERT, Stefan, 1520 Kallo (BE); VERHOENE, Jo, 1520 Kallo (BE); MASUDA, Wakako, Kakogawa-shi, Hyogo 675-0019 (JP); HAYASHI, Shunsuke, Kakogawa-shi, Hyogo 675-0019 (JP)
(74) Representative: SSM Sandmair
(86) International application number: PCT/JP2021/032259
(87) International publication number: WO 2022/244278

(57) **Abstract**

An aqueous coating agent contains an aqueous medium and a polyester resin component. The polyester resin component contains a rosin-modified polyester resin that is a reaction product of a material component containing (A) rosins, (B) an α,β-unsaturated dicarboxylic acid, and (C) a polyol. The polyester resin component has an acid value of 60 mgKOH/g or more and 180 mgKOH/g or less. The polyester resin component has a hydroxyl value of 20 mgKOH/g or more and 180 mgKOH/g or less.

## Description

### TECHNICAL FIELD

The present invention relates to an aqueous coating agent, an article, and a method of producing a rosin-modified polyester resin.

### BACKGROUND ART

Conventionally, aqueous coating agents have been known. An aqueous coating agent is, for example, applied on a substrate to form a coating film.

Such an aqueous coating agent contains, for example, a resin obtained by the following method. That is, first, 185.2 g of fatty acid dimer, 1453.3 g of pine oil rosin, 6 g of phenolsulfonic acid, and 185.2 g of polyglycerol are mixed together. Next, the mixture is heated to 250 to 270°C to allow the mixture to react until the acid value becomes 6 mgKOH/g. In this manner, a resin coating film with excellent water resistance is produced (for example, see Patent Document 1 (Example 1)).

### Citation List

### Patent Document

Patent Document 1: US Patent Application Publication No. 2013/0197152

### SUMMARY OF THE INVENTION

### PROBLEM TO BE SOLVED BY THE INVENTION

Meanwhile, depending on the field in which the aqueous coating agent is used, a coating film having excellent oil resistance, instead of water resistance, may be required.

The present invention provides an aqueous coating agent with which a coating film having excellent oil resistance can be formed, an article including the coating film produced using the aqueous coating agent, and a method of producing the rosin-modified polyester resin contained in the aqueous coating agent.

### MEANS FOR SOLVING THE PROBLEM

The present invention [1] includes an aqueous coating agent including: an aqueous medium; and a polyester resin component, wherein the polyester resin component contains a rosin-modified polyester resin that is a reaction product of a material component containing (A) rosins, (B) an α,β-unsaturated dicarboxylic acid, and (C) a polyol, wherein the polyester resin component has an acid value of 60 mgKOH/g or more and 180 mgKOH/g or less, and wherein the polyester resin component has a hydroxyl value of 20 mgKOH/g or more and 180 mgKOH/g or less.

The present invention [2] includes the aqueous coating agent described in the above-described [1], wherein in the material component, a content ratio of the α,β-unsaturated dicarboxylic acid (B) to 100 moles of the rosins (A) is 70 moles or more and 150 moles or less.

The present invention [3] includes the aqueous coating agent described in the above-described [1] or [2], wherein the α,β-unsaturated dicarboxylic acid (B) contains fumaric acid and/or maleic anhydride.

The present invention [4] includes the aqueous coating agent described in any one of the above-described [1] to [3], wherein the material component further contains (D) oils and fats and/or fatty acid.

The present invention [5] includes the aqueous coating agent described in the above-described [4], wherein a content ratio of the oils and fats and/or fatty acid (D) to a total amount of the material component is 10% by mass or more and 30% by mass or less.

The present invention [6] includes the aqueous coating agent described in any one of the above-described [1] to [5], further including a styrene-(meth)acryl copolymer.

The present invention [7] includes the aqueous coating agent described in any one of the above-described [1] to [6], further including a wax.

The present invention [8] includes an article including a coating film of the aqueous coating agent described in any one of the above-described [1] to [7].

The present invention [9] includes a method of producing a rosin-modified polyester resin, the method including: a first step of allowing the rosins (A) to react with the α,β-unsaturated dicarboxylic acid (B) to produce a first product; and a second step of allowing the first product to react with the polyol (C) after the first step to produce a second product, wherein a reaction temperature in the second step is 230°C or less.

The present invention [10] includes the method described in the above-described [9], further including: a modification step of modifying the polyol (C) with the oils and fats and/or fatty acid (D) before the second step, wherein a reaction temperature in the modification step is 230°C or more and 300°C or less.

### EFFECTS OF THE INVENTION

In the aqueous coating agent of the present invention, the acid value of the polyester resin component containing the rosin-modified polyester resin is in a predetermined range, and the hydroxyl value of the polyester resin component containing the rosin-modified polyester resin is in a predetermined range. Thus, the aqueous coating agent of the present invention can form a coating film having excellent oil resistance.

The article of the present invention includes the coating film of the above-described aqueous coating agent, and thus has excellent oil resistance.

The method of producing a rosin-modified polyester resin of the present invention provides a rosin-modified polyester resin with excellent oil resistance.

### DESCRIPTION OF THE EMBODIMENTS

The aqueous coating agent of the present invention contains an aqueous medium and a polyester resin component. More specifically, the aqueous coating agent contains an aqueous medium and a polyester resin component dissolved and/or dispersed in the aqueous medium.

Examples of the aqueous medium include water and a hydrophilic solvent. Examples of the hydrophilic solvent include alcohol, ketone, ester, ether, ether alcohol, ether alcohol acetate, and nitrile. Examples of the alcohol include methanol and ethanol. Examples of the ketone include acetone. Examples of the ester include ethyl acetate and butyl acetate. Examples of the ether include dioxane and tetrahydrofuran. Examples of the ether alcohol include cellosolve and carbitol. Examples of the ether alcohol acetate include cellosolve acetate and carbitol acetate. Examples of the nitrile include acetonitrile. These can be used alone or in a combination of two or more. As the aqueous medium, water is preferable.

The polyester resin component contains a rosin-modified polyester resin as the main component. The main component is defined as a component contained in a ratio of 75% by mass or more, preferably 80% by mass or more to the total amount. Further, the polyester resin component, although described in detail below, may contain an unreacted material component as an accessory component.

The rosin-modified polyester resin is a polyester resin modified with rosins. The rosin-modified polyester resin is a reaction product of a material component. The material component contains the rosins (A), the α,β-unsaturated dicarboxylic acid (B), and the polyol (C) as the essential components.

More specifically, the material component consists of, for example, the rosins (A), the α,β-unsaturated dicarboxylic acid (B), and the polyol (C). In this case, the total amount of the rosins (A), the α,β-unsaturated dicarboxylic acid (B), and the polyol (C) is 100% by mass with respect to the material component.

The rosins (A) are a plant-derived component. Hence, the rosin-modified polyester resin contributes to carbon neutrality. More specifically, the rosins (A) are a pine-derived compound. The pine is not especially limited, and examples thereof include the Merkusii pine, the Slash pine, and the Masson's pine. These can be used alone or in a combination of two or more.

The rosins (A) are not especially limited, and examples thereof include known unmodified rosins and/or derivatives thereof. Examples of the unmodified rosins include crude rosin and purified rosin. Examples of the crude rosin include gum rosin, tall rosin, and wood rosin. Examples of the purified rosin include a purified product of crude rosin. Examples of the rosin derivative include hydrogenated rosin, disproportionation rosin, and polymerized rosin. These can be used alone or in a combination of two or more. Examples of rosin producing countries are not especially limited, but include China, Vietnam, Indonesia, and Brazil. These can be used alone or in a combination of two or more.

As the rosins (A), in view of film forming properties and water resistance, unmodified rosins are preferable, and gum rosin is more preferable.

To the total amount of the material component, the content ratio of the rosins (A) is, in view of film forming properties, water resistance, and anti-tack properties, for example, 20% by mass or more, preferably 25% by mass or more, more preferably 30% by mass or more, even more preferably 35% by mass or more. Further, to the total amount of the material component, the content ratio of the rosins (A) is, in view of film forming properties, water resistance, and anti-tack properties, for example, 80% by mass or less, preferably 70% by mass or less, more preferably 65% by mass or less, even more preferably 60% by mass or less, even more preferably 50% by mass or less, particularly preferably 40% by mass or less.

The α,β-unsaturated dicarboxylic acid (B) is a component that improves the oil resistance of the coating film. Examples of the α,β-unsaturated dicarboxylic acid (B) include fumaric acid, maleic acid, itaconic acid, citraconic acid, and their anhydrides. Examples of the anhydride include maleic anhydride, itaconic acid anhydride, and citraconic acid anhydride. These can be used alone or in a combination of two or more.

As the α,β-unsaturated dicarboxylic acid (B), fumaric acid and maleic anhydride are preferable, and fumaric acid is more preferable. In other words, the α,β-unsaturated dicarboxylic acid (B) preferably contains fumaric acid and/or maleic anhydride, more preferably contains fumaric acid.

To the total amount of the material component, the content ratio of the α,β-unsaturated dicarboxylic acid (B) is, in view of oil resistance, for example, 3% by mass or more, preferably 5% by mass or more, more preferably 10% by mass or more, even more preferably 12% by mass or more. Further, to the total amount of the material component, the content ratio of the α,β-unsaturated dicarboxylic acid (B) is, in view of oil resistance, for example, 40% by mass or less, preferably 30% by mass or less, more preferably 25% by mass or less, even more preferably 20% by mass or less.

Further, the content ratio of the α,β-unsaturated dicarboxylic acid (B) to 100 moles of the rosins (A) is, in view of oil resistance, for example, 50 moles or more, preferably 70 moles or more, more preferably 80 moles or more, even more preferably 90 moles or more. Further, the content ratio of the α,β-unsaturated dicarboxylic acid (B) to 100 moles of the rosins (A) is, in view of oil resistance, for example, 200 moles or less, preferably 150 moles or less, more preferably 120 moles or less.

When the α,β-unsaturated dicarboxylic acid (B) is less than the above-described range, the rosins (A) that are unreacted relatively increase and the oil resistance may decrease. Meanwhile, when the α,β-unsaturated dicarboxylic acid (B) exceeds the above-described range, the α,β-unsaturated dicarboxylic acid (B) that is unreacted relatively increases and the film forming properties may decrease, and as a result, the oil resistance may decrease.

Examples of the polyol (C) include dihydric alcohols, trihydric alcohols, and tetrahydric or more alcohols. Examples of dihydric alcohols include straight-chain alkyldiol, branched-chain alkyldiol, and etherdiol. Examples of straight-chain alkyldiol include ethylene glycol, 1,3-propanediol, 1,4-butanediol, 1,5-pentanediol, and 1,6-hexanediol. Examples of branched-chain alkyldiol include propylene glycol, 1,3-butanediol, 1,2-butanediol, 3-methyl-1,5-pentanediol, and 2,6-dimethyl-1-octene-3,8-diol. Examples of ether diol include diethylene glycol, triethylene glycol, and dipropylene glycol.

Examples of dihydric alcohols include1,4-dihydroxy-2-butene, isosorbide, cyclohexane dimethanol, cyclohexanediol, tricyclodecanedimethylol, bisphenol A, hydrogenated bisphenol A, hydrogenated bisphenol F, hydrogenated bisphenol S, hydrogenated catechol, hydrogenated resorcine, hydrogenated hydroquinone, and a dicyclopentadiene diallyl alcohol copolymer. Examples of trihydric alcohols include glycerin, trimethylol ethane, trimethylol propane, trimethylol hexane, and trimethylol octane. Examples of tetrahydric or more alcohols include an alcohol having 4 to 8 hydroxyl groups in each molecule. Examples of an alcohol having 4 to 8 hydroxyl groups in each molecule include pentaerythritol, diglycerin, ditrimethylol propane, sorbitan, sorbitol, dipentaerythritol, inositol, and tripentaerythritol. These can be used alone or in a combination of two or more.

As the polyol (C), in view of oil resistance, trihydric alcohols and tetrahydric or more alcohols are preferable, trihydric alcohols are more preferable, trimethylol propane, glycerin and pentaerythritol are even more preferable, and glycerin is particularly preferable.

Further, the number of carbon atoms of the polyol (C) is, for example, 2 or more, preferably 3 or more. Further, the number of carbon atoms of the polyol (C) is, for example, 30 or less, preferably 20 or less, more preferably 10 or less, even more preferably 8 or less.

To the total amount of the material component, the content ratio of the polyol (C) is, in view of oil resistance, for example, 5% by mass or more, preferably 8% by mass or more, more preferably 12% by mass or more, even more preferably 13% by mass or more, particularly preferably 15% by mass or more. Further, to the total amount of the material component, the content ratio of the polyol (C) is, in view of oil resistance, for example, 40% by mass or less, preferably 30% by mass or less, more preferably 25% by mass or less, even more preferably 20% by mass or less.

The material component can contain the oils and fats and/or fatty acid (D) as an optional component. When the material component contains the oils and fats and/or fatty acid (D), the oil resistance of the coating film improves.

More specifically, the material component consists of, for example, the rosins (A), the α,β-unsaturated dicarboxylic acid (B), the polyol (C), and the oils and fats and/or fatty acid (D). In this case, the total amount of the rosins (A), the α,β-unsaturated dicarboxylic acid (B), the polyol (C), and the oils and fats and/or fatty acid (D) is 100% by mass with respect to the material component.

Examples of the oils and fats include linseed oil, Japanese citron (yuzu) oil, pistachio oil, rice oil, safflower oil, apricot oil, cotton seed oil, sesame oil, corn oil, watermelon oil, soybean oil, poppy seed oil, apple oil, sunflower oil, cactus oil, tall oil, walnut oil, tung oil, and castor oil. Examples of fatty acid include a fatty acid derived from the above-described oils and fats. More specifically, examples of the fatty acid include linseed oil fatty acid, Japanese citron (yuzu) oil fatty acid, pistachio oil fatty acid, rice oil fatty acid, safflower oil fatty acid, apricot oil fatty acid, cotton seed oil fatty acid, sesame oil fatty acid, corn oil fatty acid, watermelon oil fatty acid, soybean oil fatty acid, poppy seed oil fatty acid, apple oil fatty acid, sunflower oil fatty acid, cactus oil fatty acid, tall oil fatty acid, walnut oil fatty acid, tung oil fatty acid, and castor oil fatty acid. These can be used alone or in a combination of two or more.

To the total amount of the material component, the content ratio of the oils and fats and/or fatty acid (D) (the total amount of them when they are used in combination) is, in view of flexibility, water resistance, and oil resistance, for example, 0% by mass or more, preferably 10% by mass or more, more preferably 12% by mass or more, even more preferably 15% by mass or more, particularly preferably 17% by mass or more. Further, to the total amount of the material component, the content ratio of the oils and fats and/or fatty acid (D) (the total amount of them when they are used in combination) is, in view of flexibility, water resistance, and oil resistance, for example, 40% by mass or less, preferably 35% by mass or less, more preferably 30% by mass or less, even more preferably 25% by mass or less.

As the oils and fats and/or fatty acid (D), in view of oil resistance, oils and fats and/or fatty acid having a predetermined iodine value are/is preferable. More specifically, the iodine value of the oils and fats and/or fatty acid (D) is, in view of oil resistance, for example, 50 mg/100 mg or more, preferably 70 mg/100 mg or more, more preferably 100 mg/100 mg or more.

Even more preferably, the oils and fats and/or fatty acid (D) contain(s), in view of oil resistance, oils and fats and/or fatty acid with an iodine value of 100 mg/100 g or more as the main component. The main component is defined as a component accounting for 80% by mass or more, preferably 90% by mass or more, more preferably 95% by mass or more. In other words, to the total amount of the oils and fats and/or fatty acid (D), the content ratio of the oils and fats and/or fatty acid with an iodine value of 100 or more is, for example, 80% by mass or more, preferably 90% by mass or more, more preferably 95% by mass or more. Particularly preferably, the oils and fats and/or fatty acid (D) consist(s) of the oils and fats and/or fatty acid with an iodine value of 100 mg/100 g or more.

Examples of the oils and fats and/or fatty acid with an iodine value of 100 mg/100 g or more include linseed oil, Japanese citron (yuzu) oil, pistachio oil, rice oil, safflower oil, apricot oil, cotton seed oil, sesame oil, corn oil, watermelon oil, soybean oil, poppy seed oil, apple oil, sunflower oil, cactus oil, tall oil, walnut oil, tung oil, castor oil, and fatty acid derived from the oils and fats.

The iodine value is the value measured according to "2.3.4.1-1996 (Wijs-Cyclohexane Method)" of Standard Methods for the Analysis of Fats, Oils and Related Materials (Japan Oil Chemists' Society). Specifically, in the measurement of the iodine value, first, 0.15 g of vegetable oil to be measured is dissolved in 10 ml of cyclohexane. Next, 25 mL of a Wijs solution is added to the dissolved solution and left in a dark place for approximate 1 hour. Thereafter, the above-described solution is titrated with 0.1 mol/L of a sodium thiosulfate standard solution.

Based on the amount of the sodium thiosulfate standard solution dropped until the end, the iodine value is calculated.

Further, the material component may contain (E) another carboxylic acid as an optional component. The other carboxylic acid is carboxylic acid (E) other than the rosins (A), the α,β-unsaturated dicarboxylic acid (B), and the oils and fats and/or fatty acid (D).

More specifically, the material component consists of, for example, the rosins (A), the α,β-unsaturated dicarboxylic acid (B), the polyol (C), the oils and fats and/or fatty acid (D), and the other carboxylic acid (E). In this case, the total amount of the rosins (A), the α,β-unsaturated dicarboxylic acid (B), the polyol (C), the oils and fats and/or fatty acid (D), and the other carboxylic acid (E) is 100% by mass with respect to the material component.

Alternatively, the material component consists of, for example, the rosins (A), the α,β-unsaturated dicarboxylic acid (B), the polyol (C), and the other carboxylic acid (E). In this case, the total amount of the rosins (A), the α,β-unsaturated dicarboxylic acid (B), the polyol (C), and the other carboxylic acid (E) is 100% by mass with respect to the material component.

Examples of the other carboxylic acid (E) include α,β-unsaturated monocarboxylic acid, and a carboxylic acid without having an unsaturated bond between an α-carbon and a β-carbon.

Examples of α,β-unsaturated monocarboxylic acid include acrylic acid and methacrylic acid. These can be used alone or in a combination of two or more.

To the total amount of the material component, the content ratio of the α,β-unsaturated monocarboxylic acid is, in view of oil resistance, for example, 0% by mass or more, preferably 5% by mass or more, more preferably 8% by mass or more, even more preferably 10% by mass or more. Further, to the total amount of the material component, the content ratio of the α,β-unsaturated monocarboxylic acid is, in view of oil resistance, for example, 40% by mass or less, preferably 30% by mass or less, more preferably 20% by mass or less, even more preferably 15% by mass or less.

Examples of the carboxylic acid without having an unsaturated bond between an α-carbon and a β-carbon include oxalic acid, malonic acid, succinic acid, glutaric acid, adipic acid, suberic acid, azelaic acid, sebacic acid, dodecanedioic acid, tetradecanedioic acid, hexadecanedioic acid, phthalic acid, isophthalic acid, terephthalic acid, tetrahydrophthalic acid, oxalacetic acid, methylmalonic acid, dimethylmalonic acid, methylsuccinic acid, 2,2-dimethylsuccinic acid, methylglutaric acid, dimethylglutaric acid, diglycol acid, 1,3-acetonedicarboxylic acid, ketoglutaric acid, cyclopropane-1,1-dicarboxylic acid, cylobutane-1,1-dicarboxylic acid, cyclohexane-1,1-dicarboxylic acid, 2-oxoadipic acid, 4-oxoheptanedioic acid, 5-oxoazelaic acid, phenylenedioxydiacetic acid, indane-2,2-dicarboxylic acid, naphthalene-2,6-dicarboxylic acid, naphthalene-2,7-dicarboxylic acid, and cyclohexanedicarboxylic acid, trimellitic acid, and pyromellitic acid. These can be used alone or in a combination of two or more.

As the carboxylic acid without having an unsaturated bond between an α-carbon and a β-carbon, succinic acid and adipic acid are preferable. The carboxylic acid without having an unsaturated bond between an α-carbon and a β-carbon improves the oil resistance.

To the total amount of the material component, the content ratio of the carboxylic acid without having an unsaturated bond between an α-carbon and a β-carbon is, in view of oil resistance, for example, 0% by mass or more, preferably 5% by mass or more, more preferably 8% by mass or more, even more preferably 10% by mass or more. Further, to the total amount of the material component, the content ratio of the carboxylic acid without having an unsaturated bond between an α-carbon and a β-carbon is, in view of oil resistance, for example, 30% by mass or less, preferably 25% by mass or less, more preferably 20% by mass or less, even more preferably 15% by mass or less.

Alternatively, as the other carboxylic acid (E), the above-described α,β-unsaturated monocarboxylic acid and the carboxylic acid without having an unsaturated bond between an α-carbon and a β-carbon may be used in combination. In this case, the total amount of the α,β-unsaturated monocarboxylic acid and the carboxylic acid without having an unsaturated bond between an α-carbon and a β-carbon with respect to the total amount of the material component is, for example, 0% by mass or more, preferably 5% by mass or more. Further, the total amount of the α,β-unsaturated monocarboxylic acid and the carboxylic acid without having an unsaturated bond between an α-carbon and a β-carbon with respect to the total amount of the material component is, for example, 60% by mass or less, preferably 40% by mass or less.

Then, the rosin-modified polyester resin may be obtained as a reaction product obtained by the reaction of the above-described material component. In the reaction, for example, the above-described material component may collectively be reacted. The material component may be reacted in a stepwise reaction. Preferably, the above-described material component is reacted in a stepwise reaction.

In the stepwise reaction, the order of the steps of the reaction is not especially limited. Preferably, first, the rosins (A) are allowed to react with the α,β-unsaturated dicarboxylic acid (B) to obtain the first product. Next, the first product is allowed to react with the polyol (C) to obtain the second product containing the rosin-modified polyester resin.

More specifically, in this method, first, the rosins (A) and the α,β-unsaturated dicarboxylic acid (B) are blended in the above-described ratio. Then, the rosins (A) are allowed to react with the α,β-unsaturated dicarboxylic acid (B). In this manner, the first product is produced (the first step).

More specifically, in the first step, the Diels-Alder reaction between the conjugated double bond of the rosins (A) and the double bond of the α,β-unsaturated dicarboxylic acid (B) is carried out.

The reaction temperature in the first step is, in view of adjusting the acid value and hydroxyl value of the rosin-modified polyester resin, for example, 150°C or more, preferably 170°C or more, more preferably 180°C or more. Further, the reaction temperature in the first step is, in view of adjusting the acid value and hydroxyl value of the rosin-modified polyester resin, for example, 230°C or less, preferably 220°C or less, more preferably 200°C or less.

The reaction time in the first step is, in view of adjusting the acid value and hydroxyl value of the rosin-modified polyester resin, for example, 0.1 hours or more, preferably 0.5 hours or more. Further, the reaction time in the first step is, in view of adjusting the acid value and hydroxyl value of the rosin-modified polyester resin, for example, 5 hours or less, preferably 3 hours or less.

In the first step, as necessary, a known reaction catalyst may be added in an appropriate ratio. Further, in the first step, the material component may be reacted under the absence of a solvent or under the presence of a known solvent.

In this manner, the first product is obtained. The first product contains a tertiary carboxy group (a tertiary carboxy group of the abietic acid monomer) derived from the rosins (A) and a secondary carboxy group derived from the α,β-unsaturated dicarboxylic acid (B).

Next, in this method, the polyol (C) is blended in the above-described ratio with respect to the first product. Then, the first product is allowed to react with the polyol (C). In this manner, the second product is obtained (the second step).

More specifically, in the second step, an esterification reaction between the carboxy group contained in the first product and the hydroxyl group contained in the polyol (C) is carried out.

The reaction temperature in the second step is, in view of adjusting the acid value and hydroxyl value of the rosin-modified polyester resin, for example, 150°C or more, preferably 160°C or more, more preferably 170°C or more, even more preferably 180°C or more. Further, the reaction temperature in the second step is, in view of adjusting the acid value and hydroxyl value of the rosin-modified polyester resin, for example, 230°C or less, preferably 220°C or less, more preferably 210°C or less, even more preferably 200°C or less.

When the reaction temperature is in the above-described range, the reaction of the tertiary carboxy group derived from the rosins (A) is suppressed while the reaction of the secondary carboxy group derived from the α,β-unsaturated dicarboxylic acid (B) is enabled. This improves the film forming properties and oil resistance.

More specifically, when the reaction temperature exceeds the above-described upper limit, the tertiary carboxy group derived from the rosins (A) reacts with the hydroxyl group contained in the polyol (C). This reaction facilitates the formation of the net structure of the polyester resin component. Thus, when the rosin-modified polyester resin is used for the aqueous coating agent, the oil resistance may decrease. Contrarily, when the reaction temperature is lower than the above-described lower limit, the reaction does not sufficiently advance, and thus the oil resistance may decrease.

The reaction time in the second step is, in view of adjusting the acid value and hydroxyl value of the rosin-modified polyester resin, for example, 1 hour or more, preferably 3 hours or more. Further, the reaction time in the second step is, in view of adjusting the acid value and hydroxyl value of the rosin-modified polyester resin, for example, 48 hours or less, preferably 24 hours or less. Furthermore, in this reaction, as necessary, the condensed water by the esterification reaction may be distilled with a known method.

Furthermore, in the second step, as necessary, the oils and fats and/or fatty acid (D) may be added together with the first product and the polyol (C) in the above-described ratio and allowed to react. More specifically, the carboxy group contained in the oils and fats and/or fatty acid (D) is allowed to react with the hydroxyl group contained in the polyol (C) in an esterification reaction.

Alternatively, in the second step, as necessary, the other carboxylic acid (E) may be added together with the first product and the polyol (C) in the above-described ratio and allowed to react. More specifically, the carboxy group contained in the other carboxylic acid (E) is allowed to react with the hydroxyl group contained in the polyol (C) in an esterification reaction.

In the second step, as necessary, a known reaction catalyst may be added in an appropriate ratio. Furthermore, in the second step, the material component may be reacted under the absence of a solvent or under the presence of a known solvent.

In this manner, the second product is produced. The second product is a resin composition containing the rosin-modified polyester resin. The second product (resin composition) may be used as the polyester resin component of the aqueous coating agent.

Furthermore, when the material component contains the oils and fats and/or fatty acid (D), the polyol (C) may be modified with the oils and fats and/or fatty acid (D) (modification step) prior to the above-described second step.

Although the blending ratio in the modification step is appropriately set, for example, with respect to 1 mole of the oils and fats and/or fatty acid (D), the hydroxyl group of the polyol (C) is, for example, 3 moles or more, preferably 10 moles or more and, for example, 50 moles or less, preferably 40 moles or less.

The reaction temperature in the modification step is, in view of oil resistance and film forming properties, for example, 230°C or more, preferably 240°C or more, more preferably 250°C or more. Further, the reaction temperature in the modification step is, in view of oil resistance and film forming properties, for example, 300°C or less, preferably 280°C or less, more preferably 270°C or less. When the reaction temperature is excessively low, the reaction in the modification step does not advance and thus the oils and fats and/or fatty acid (D) may not be incorporated in the resin. This may decrease the oil resistance and film forming properties. Contrarily, when the reaction temperature is excessively high, a decomposition reaction occurs and may increase the low-molecular-weight component. Thus, the oil resistance and film forming properties may decrease.

The reaction time in the modification step is, in view of oil resistance and film forming properties, for example, 0.5 hours or more, preferably 1 hour or more. Further, the reaction time in the modification step is, in view of oil resistance and film forming properties, for example, 20 hours or less, preferably 10 hours or less.

In the modification step, as necessary, a known reaction catalyst may be added in an appropriate ratio. Furthermore, in the modification step, the material component may be reacted under the absence of a solvent or under the presence of a known solvent.

Then, according to the above-described method, the polyol (C) modified with the oils and fats and/or fatty acid (D) is produced. Further, the polyol (C) modified with the oils and fats and/or fatty acid (D) is used in the above-described second step. In other words, the first product is allowed to react with the polyol (C) modified with the oils and fats and/or fatty acid (D) in an esterification reaction.

In this manner, the second product is produced. The second product is a resin composition containing the rosin-modified polyester resin. The second product (resin composition) may be used as the polyester resin component of the aqueous coating agent.

The rosin-modified polyester resin has a weight-average molecular weight (standard polystyrene calibration) of, for example, 1,000 or more, preferably 3,000 or more, more preferably 5,000 or more. Further, the weight-average molecular weight (standard polystyrene calibration) of the rosin-modified polyester resin is, for example, 100,000 or less, preferably 70,000 or less, more preferably 50,000 or less.

Further, the rosin-modified polyester resin has a softening point (measurement method: Mettler method) of, in view of film forming properties and anti-tack properties, for example, 70°C or more, preferably 75°C or more, more preferably 80°C or more. Furthermore, the softening point (measurement method: Mettler method) of the rosin-modified polyester resin is, in view of film forming properties and anti-tack properties, for example, 150°C or less, preferably 130°C or less, more preferably 120°C or less.

Furthermore, the content ratio of the rosin-modified polyester resin to the total amount of the polyester resin component is, for example, 75% by mass or more, preferably 80% by mass or more. Furthermore, the content ratio of the rosin-modified polyester resin to the total amount of the polyester resin component is, for example, 100% by mass or less, preferably 90% by mass or less.

The polyester resin component may contain an unreacted material component in addition to the rosin-modified polyester resin. Examples of the unreacted material component include the rosins (A) that are unreacted, the α,β-unsaturated dicarboxylic acid (B) that is unreacted, the polyol (C) that is unreacted, the oils and fats and/or fatty acid (D) that are/is unreacted, and the other carboxylic acid (E) that is unreacted. The unreacted material component is, as necessary, removed from the resin composition.

The unreacted material component normally has a molecular weight of 500 or less. Hereinafter, the unreacted material component is referred to as a component having a molecular weight of 500 or less. The content ratio of the component having a molecular weight of 500 or less to the total amount of the resin composition (polyester resin component) is, for example, 25% by mass or less, preferably 20% by mass or less. Further, the content ratio of the component having a molecular weight of 500 or less to the total amount of the resin composition (polyester resin component) is, for example, 0% by mass or more, preferably 10% by mass or more.

When the component having a molecular weight of 500 or less is excessively contained in the polyester resin component, the film forming properties and oil resistance may decrease. The content ratio of the component having a molecular weight of 500 or less is measured with gel permeation chromatograph in accordance with Examples described below.

The polyester resin component has an acid value of, in view of oil resistance, 60 mgKOH/g or more, preferably 80 mgKOH/g or more, more preferably 100 mgKOH/g or more, even more preferably 120 mgKOH/g or more. Further, the acid value of the polyester resin component is, in view of oil resistance, 180 mgKOH/g or less, preferably 170 mgKOH/g or less, more preferably 160 mgKOH/g or less, even more preferably 150 mgKOH/g or less, particularly preferably 130 mgKOH/g or less. The acid value of the polyester resin component is measured in compliance with JIS K 5601-2-1 (1999).

The polyester resin component has a hydroxyl value of, in view of oil resistance, 20 mgKOH/g or more, preferably 40 mgKOH/g or more, more preferably 60 mgKOH/g or more, even more preferably 80 mgKOH/g or more, even more preferably 120 mgKOH/g or more, particularly preferably 130 mgKOH/g or more. Further, the hydroxyl value of the polyester resin component is, in view of oil resistance, 180 mgKOH/g or less, preferably 170 mgKOH/g or less, more preferably 160 mgKOH/g or less, even more preferably 150 mgKOH/g or less, particularly preferably 140 mgKOH/g or less. The hydroxyl value is measured in compliance with JIS K 0070 (1992).

To adjust the acid value and hydroxyl value of the polyester resin component in the above-described range, for example, the blending amount of the material component is adjusted in the above-described ratio, and the reaction temperature and the reaction time are adjusted to the above-described conditions.

The above-described polyester resin component is dissolved and/or dispersed in the aqueous medium, thereby producing an aqueous coating agent.

The ratios of the aqueous medium and the polyester resin component are appropriately set depending on the purpose and use. For example, to the total amount of the aqueous medium and the polyester resin component, the aqueous medium is, for example, 5% by mass or more, preferably 10% by mass or more. Further, to the total amount of the aqueous medium and the polyester resin component, the aqueous medium is, for example, 80% by mass or less, preferably 70% by mass or less. Further, to the total amount of the aqueous medium and the polyester resin component, the polyester resin component is, for example, 20% by mass or more, preferably 30% by mass or more. Further, to the total amount of the aqueous medium and the polyester resin component, the polyester resin component is, for example, 95% by mass or less, preferably 90% by mass or less. When the ratios of the aqueous medium and the polyester resin component are in the above-described ranges, a rapid increase in viscosity is suppressed and the productivity, coating property, and drying property of the aqueous coating agent can be improved.

Further, the aqueous coating agent may contain another resin in addition to the aqueous medium and the polyester resin component. The other resin is a resin other than the above-described polyester resin component.

Examples of the other resin include acrylic resin, styrene-modified acrylic resin, silicone acrylic resin, modified silicone acrylic resin, rosin phenol resin, rosin ester resin, terpene phenol resin, coumarone-indene resin, petroleum resin, epoxy resin, modified epoxy resin, polyester resin, vinyl acetate resin, ethylene-vinyl acetate resin, urethane resin, urea resin, melamine resin, and cellulosic resin. These can be used alone or in a combination of two or more.

As the other resin, styrene-modified acrylic resin is preferable. When the aqueous coating agent contains a styrene-modified acrylic resin, more excellent oil resistance is obtained.

More specifically, examples of the styrene-modified acrylic resin include a styrene-(meth)acryl copolymer. In view of oil resistance, the aqueous coating agent preferably contains a styrene-(meth)acryl copolymer. The term (meth)acryl refers to acryl and/or methacryl.

The styrene-(meth)acryl copolymer is produced, for example, by the copolymerization of a monomer component containing styrenes and a (meth)acrylic monomer copolymerizable with the styrenes.

Examples of the styrenes include styrene, α-methylstyrene, vinyl toluene, ethyl vinyl toluene, and chlormethylstyrene. These can be used alone or in a combination of two or more or more. As the styrenes, styrene is preferable.

The content ratio of the styrenes to the total amount of the monomer component is, for example, 10% by mass or more, preferably 20% by mass or more. Further, the content ratio of the styrenes to the total amount of the monomer component is, for example, 80% by mass or less, preferably 70% by mass or less. When the content ratio of the styrenes is in the above-described range, particularly excellent oil resistance is obtained.

Examples of the (meth)acrylic monomer include a (meth)acrylic acid ester and a hydrophilic group-containing (meth)acrylic monomer.

Examples of the (meth)acrylic acid ester include a (meth)acrylic acid ester having an alkyl group having 1 to 24 carbon atom(s). The alkyl group may be in straight-chain form or branched-chain form, or have a carbon ring (an aliphatic ring and/or an aromatic ring). More specifically, examples of the (meth)acrylic acid ester include (meth)acrylic acid methyl, (meth)acrylic acid ethyl, (meth)acrylic acid n-propyl, (meth)acrylic acid i-propyl, (meth)acrylic acid n-butyl, (meth)acrylic acid i-butyl, (meth)acrylic acid t-butyl, (meth)acrylic acid 2-ethylhexyl, (meth)acrylic acid i-decyl, (meth)acrylic acid lauryl, (meth)acrylic acid cetyl, (meth)acrylic acid stearyl, (meth)acrylic acid behenyl, (meth)acrylic acid cyclohexyl , and (meth)acrylic acid benzyl. These can be used alone or in a combination of two or more.

As the (meth)acrylic acid ester, (meth)acrylic acid methyl, (meth)acrylic acid n-butyl, and (meth)acrylic acid 2-ethylhexyl are preferable, and methacrylic acid methyl, acrylic acid butyl, and acrylic acid 2-ethylhexyl are more preferable. Further, as the (meth)acrylic acid ester, even more preferably, methacrylic acid methyl, acrylic acid butyl, and acrylic acid 2-ethylhexyl are used in combination. Furthermore, as the (meth)acrylic acid ester, even more preferably, methacrylic acid methyl and acrylic acid butyl are used in combination.

Examples of the hydrophilic group-containing (meth)acrylic monomer include a hydroxyl group-containing monomer, a carboxyl group-containing monomer, an amino group-containing monomer, an amide group-containing monomer, and a hetero ring-containing monomer.

Examples of the hydroxyl group-containing monomer include (meth)acrylic acid 2-hydroxy ethyl, (meth)acrylic acid hydroxy propyl, N-hydroxy ethylacrylamide, methylol (meth)acrylamide, polyalkylene glycol (meth)acrylate, and glycerol mono (meth)acrylate. These can be used alone or in a combination of two or more. As the hydroxyl group-containing monomer, methacrylic acid 2-hydroxy ethyl is preferable.

Examples of the carboxyl-containing monomer include a monocarboxylic acid-containing monomer, a dicarboxylic acid-containing monomer, and an acid anhydride. Examples of the monocarboxylic acid-containing monomer include (meth)acrylic acid and crotonic acid. Examples of the dicarboxylic acid-containing monomer include maleic acid, fumaric acid, itaconic acid, and citraconic acid. Examples of the acid anhydride include an acid anhydride of a monocarboxylic acid-containing monomer and an acid anhydride of a dicarboxylic acid-containing monomer. These can be used alone or in a combination of two or more. As the carboxyl-containing monomer, a monocarboxylic acid-containing monomer is preferable, and methacrylic acid is more preferable.

Examples of the amino group-containing monomer include (meth)acrylic acid 2-(dimethylamino)ethyl and dimethylaminopropyl (meth)acrylamide. These can be used alone or in a combination of two or more.

Examples of the amide group-containing monomer include acrylamide, methacrylamide, N-isopropylacrylamide, N-vinyl formamide, N-vinyl acetamide, and N,N'-dimethylacrylamide. These can be used alone or in a combination of two or more.

Examples of the hetero ring-containing monomer include N-vinyl pyrrolidone. These can be used alone or in a combination of two or more.

These hydrophilic group-containing (meth)acrylic monomers can be used alone or in a combination of two or more. As the hydrophilic group-containing (meth)acrylic monomer, a hydroxyl group-containing monomer and a carboxyl group-containing monomer are preferable.

These (meth)acrylic monomers can be used alone or in a combination of two or more. As the (meth)acrylic monomer, a (meth)acrylic acid ester and a hydrophilic group-containing (meth)acrylic monomer are preferable, and more preferably, a (meth)acrylic acid ester and a hydrophilic group-containing (meth)acrylic monomer are used in combination.

In other words, the monomer component preferably contains styrenes, a (meth)acrylic acid alkyl ester, and a hydrophilic group-containing (meth)acrylic monomer.

Further, the monomer component more preferably contains styrenes, a (meth)acrylic acid alkyl ester, and a hydroxyl group-containing monomer and/or a carboxyl group-containing monomer.

Furthermore, the monomer component even more preferably consists of styrenes, a (meth)acrylic acid alkyl ester, and a hydroxyl group-containing monomer and/or a carboxyl group-containing monomer.

The content ratio of the (meth)acrylic monomer is appropriately set depending on the purpose and use.

For example, when the (meth)acrylic monomer contains a (meth)acrylic acid alkyl ester, the content ratio (total amount) of the (meth)acrylic acid alkyl ester, for example, to the total amount of the monomer component is, for example, 10% by mass or more, preferably 20% by mass or more. Further, the content ratio (total amount) of the (meth)acrylic acid alkyl ester to the total amount of the monomer component is, for example, 90% by mass or less, preferably 80% by mass or less.

Further, when the (meth)acrylic monomer contains a hydroxyl group-containing monomer, the content ratio (total amount) of the hydroxyl group-containing monomer, for example, to the total amount of the monomer component is, for example, 5% by mass or more, preferably 10% by mass or more. Further, the content ratio (total amount) of the hydroxyl group-containing monomer to the total amount of the monomer component is, for example, 60% by mass or less, preferably 50% by mass or less.

Further, when the (meth)acrylic monomer contains a carboxyl group-containing monomer, the content ratio (total amount) of the hydroxyl group-containing monomer, for example, to the total amount of the monomer component is, for example, 1% by mass or more, preferably 3% by mass or more. Further, the content ratio (total amount) of the carboxyl group-containing monomer to the total amount of the monomer component is, for example, 20% by mass or less, preferably 10% by mass or less.

Further, the content ratio (total amount) of the (meth)acrylic monomer, for example, to the total amount of the monomer component is, for example, 20% by mass or more, preferably 30% by mass or more. Further, the content ratio (total amount) of the (meth)acrylic monomer to the total amount of the monomer component is, for example, 90% by mass or less, preferably 90% by mass or less, more preferably 80% by mass or less.

The styrene-(meth)acryl copolymer is obtained, for example, by allowing the above-described monomer component to polymerize with a known method. More specifically, for example, first, the above-described monomer component is mixed to prepare a monomer composition. Then, the monomer composition is allowed to emulsion polymerize under the presence of a known aqueous solvent. Examples of the aqueous solvent include the above-described aqueous mediums. In the polymerization, the method of adding the monomer composition is not especially limited and examples thereof include collectively charging the composition, separately charging the composition, dripping all the composition, and dripping a part of the composition.

Further, in the above-described polymerization, as necessary, a chain transfer agent may be blended. The chain transfer agent can adjust the weight-average molecular weight of the styrene-(meth)acryl copolymer. Examples of the chain transfer agent include an oil-soluble chain transfer agent and a water-soluble chain transfer agent. Examples of the oil-soluble chain transfer agent include t-dodecylmercaptan, n-dodecylmercaptan, n-octylmercaptan, mercaptopropionic acid dodecylester, cumene, carbon tetrachloride, α-methylstyrene dimer, and terpinolene. Examples of the water-soluble chain transfer agent include mercaptoethanol, thioglycolic acid, (meth)aryl sulfonic acid, and their salts. These can be used alone or in a combination of two or more. The type and blending amount of the chain transfer agent are appropriately set depending on the purpose and use.

Furthermore, in the above-described polymerization, as necessary, a polymerization initiator may be blended. Examples of the polymerization initiator include an azoic initiator and a peroxide polymerization initiator. Examples of the azoic initiator include azobismethylbutyronitrile, dimethylazobisisobutyrate, azobisdimethylvaleronitrile, azobisisobutyronitrile, and an azobis-2-amidinopropanehydrochloric acid salt. Examples of the peroxide polymerization initiator include a persulfuric acid salt, hydrogen peroxide, benzoyl peroxide, t-butyl peroxybenzoate, t-butyl peroxy isopropyl monocarbonate, t-butyl peroxy-2-ethylhexanoate, and cumenehydroperoxide. Further, as the polymerization initiator, a redox initiator may be used. These can be used alone or in a combination of two or more. The type and blending amount of the polymerization initiator are appropriately set depending on the purpose and use.

Further, in the above-described polymerization, as necessary, an emulsifier may be blended. Examples of the emulsifier include a low-molecular-weight emulsifier and a high-molecular-weight emulsifier.

Examples of the low-molecular-weight emulsifier include sodium lauryl sulfate, ammonium lauryl sulfate, sodium dodecylbenzenesulfonate, sodium polyoxyethylenealkylether sulfate, sodium polyoxyethylenealkylphenylether sulfate, ammonium polyoxyethylenealkylphenylether sulfate, sodium polyoxyethylenealkyl sulfosuccinate, polyoxyalkylene polycyclic phenyl ether sulfate salt (for example, sodium polyoxyethylene polycyclic phenyl ether sulfate, ammonium polyoxyethylene polycyclic phenyl ether sulfate, sodium polyoxypropylene polycyclic phenyl ether sulfate, ammonium polyoxypropylene polycyclic phenyl ether sulfate), polyoxyethylenealkylether, polyoxyethylenealkylphenylether, and polyoxyethylene fatty acid ester. Examples of the high-molecular-weight emulsifier include polyvinyl alcohol and polyethylene oxide. These can be used alone or in a combination of two or more.

Further, examples of the emulsifier also include a reactive emulsifier. Examples of the reactive emulsifier include a sulfuric acid ester salt of polyoxyalkylene phenyl ether having 1 or more functional group(s) having an ethylenically unsaturated bond, a sulfosuccinic acid ester salt of polyoxyethylene alkyl ether having 1 or more functional group(s) having an ethylenically unsaturated bond, a sulfuric acid ester salt of polyoxyethylene alkyl ether having 1 or more functional group(s) having an ethylenically unsaturated bond, a sulfosuccinic acid ester salt of polyoxyethylenealkylphenylether having 1 or more functional group(s) having an ethylenically unsaturated bond, a sulfuric acid ester salt of polyoxy alkylene ether having 1 or more functional group(s) having an ethylenically unsaturated bond, a sulfuric acid ester salt of polyoxyalkylene alkylphenylether having 1 or more functional group(s) having an ethylenically unsaturated bond, and an acidic phosphate (meth)acrylic acid ester salt having 1 or more functional group(s) having an ethylenically unsaturated bond. Examples of the ester salt include a sodium ester salt and an ammonium ester salt. These can be used alone or in a combination of two or more.

The type of the emulsifier, the blending amount of the emulsifier, and the timing of blending the emulsifier are appropriately set depending on the purpose and use.

The conditions for the polymerization are not especially limited, but appropriately set depending on the type of the monomer component, the type of the polymerization initiator, and their amounts. For example, the polymerization temperature is, for example, 80°C or more, preferably 85°C or more. Further, the polymerization temperature is, for example, 120°C or less, preferably 115°C or less. Further, the polymerization time is, for example, 2 hours or more, preferably 3 hours or more. Further, the polymerization time is, for example, 6 hours or less, preferably 5 hours or less.

By the above-described polymerization, a solution of the styrene-(meth)acryl copolymer and/or a dispersion of the styrene-(meth)acryl copolymer are/is obtained.

In the solution of the styrene-(meth)acryl copolymer and/or the dispersion of the styrene-(meth)acryl copolymer, the concentration of the solid content of the styrene-(meth)acryl copolymer is, for example, 5% by mass or more, preferably 10% by mass or more. Further, the concentration of the solid content of the styrene-(meth)acryl copolymer is, for example, 50% by mass or less, preferably 40% by mass or less.

Further, the solution of the styrene-(meth)acryl copolymer and/or the dispersion of the styrene-(meth)acryl copolymer have (has) a viscosity (25°C) of, for example, 1 mPa·s or more, preferably 5 mPa·s or more. Further, the viscosity (25°C) of the solution of the styrene-(meth)acryl copolymer and/or the dispersion of the styrene-(meth)acryl copolymer is, for example, 500 mPa·s or less, preferably 200 mPa·s or less, more preferably 100 mPa·s or less. The viscosity is measured with a B-type viscometer in compliance with JIS K 7117-1 (1999).

Further, as necessary, a neutralizer is added to the solution of the styrene-(meth)acryl copolymer and/or the dispersion of the styrene-(meth)acryl copolymer. In this manner, an alkali salt solution of a styrene-(meth)acryl copolymer is obtained. Examples of the neutralizer include ammonia.

The solution of the styrene-(meth)acryl copolymer and/or the dispersion of the styrene-(meth)acryl copolymer have(has) a pH of, for example, 3 or more, preferably 4 or more. Further, the pH of the solution of the styrene-(meth)acryl copolymer and/or the dispersion of the styrene-(meth)acryl copolymer is, for example, 10 or less, preferably 9 or less.

The styrene-(meth)acryl copolymer has a glass-transition temperature of, for example, - 30°C or more, preferably -10°C or more. Further, the glass-transition temperature of the styrene-(meth)acryl copolymer is, for example, 120°C or less, preferably 100°C or less. The glass-transition temperature is calculated using the FOX equation.

The styrene-(meth)acryl copolymer has a weight-average molecular weight of, for example, 5000 or more, preferably 10000 or more. Further, the weight-average molecular weight of the styrene-(meth)acryl copolymer is, for example, 300000 or less, preferably 200000 or less. The weight-average molecular weight is calibrated with standard polystyrene measured with gel permeation chromatograph.

In the aqueous coating agent, the content ratio of the other resin is appropriately set depending on the purpose and use. For example, to 100 parts by mass of the polyester resin component, the other resin (preferably, a styrene-(meth)acryl copolymer) is, for example, 0 parts by mass or more, preferably 30 parts by mass or more, more preferably 50 parts by mass or more. Further, to 100 parts by mass of the polyester resin component, the other resin (preferably, a styrene-(meth)acryl copolymer) is, for example, 1000 parts by mass or less, preferably 500 parts by mass or less.

Further, the aqueous coating agent may contain a wax. The aqueous coating agent preferably contains a wax.

Examples of the wax include a fatty acid amide wax, a carnauba wax, a rice bran wax, a polyolefin wax, a paraffin wax, a Fischer-Tropsch wax, a beeswax, a microcrystalline wax, an oxidized polyethylene wax, and an amide wax. These can be used alone or in a combination of two or more.

As the wax, a fatty acid amide wax, a carnauba wax, a polyolefin wax, a paraffin wax, and a microcrystalline wax are preferable, and a carnauba wax, a polyolefin wax, and a paraffin wax are more preferable.

More specifically, examples of the fatty acid amide wax include a pelargonic acid amide, a capric acid amide, an undecylic acid amide, a lauric acid amide, a tridecylic acid amide, a myristic acid amide, a pentadecylic acid amide, a palmitic acid amide, a heptadecylic acid amide, a stearic acid amide, a nonadecane acid amide, an arachic acid amide, a behenic acid amide, a lignoceric acid amide, an oleic acid amide, a cetoleic acid amide, a linolic acid amide, a linolenic acid amide, and a mixture thereof. Further, examples of the fatty acid amide wax include fatty acid amide of animal and vegetable oils and fats. These can be used alone or in a combination of two or more.

More specifically, examples of the carnauba wax include MICROKLEAR 418 (manufactured by Micro Powders, Inc.), and purified Powdered Carnauba Wax #1 (Nippon Wax). These can be used alone or in a combination of two or more.

More specifically, examples of the olefin wax include a polyethylene wax, a polypropylene wax, MPP-635VF (Micro Powders, Inc.), and MP-620VF XF (Micro Powders, Inc.). These can be used alone or in a combination of two or more.

More specifically, examples of the paraffin wax include MP-28C, MP-22XF, MP-28C (all of them manufactured by Micro Powders, Inc.). These can be used alone or in a combination of two or more.

The wax has a melting point of, in view of oil resistance and heat resistance, for example, 60°C or more, and, for example, 130°C or less.

The content ratio of the wax in the aqueous coating agent is appropriately set depending on the purpose and use. For example, to 100 parts by mass of the polyester resin component, the wax is, for example, 0 parts by mass or more, preferably 1 part by mass or more, more preferably 3 parts by mass or more. Further, to 100 parts by mass of the polyester resin component, the wax is, for example, 50 parts by mass or less, preferably 30 parts by mass or less.

In view of oil resistance, the aqueous coating agent preferably contains a polyester resin component and another resin (preferably, a styrene-(meth)acryl copolymer) and/or a wax.

In view of oil resistance, the aqueous coating agent more preferably contains a polyester resin component, another resin (preferably, a styrene-(meth)acryl copolymer), and a wax.

For example, when the aqueous coating agent contains a polyester resin component and a styrene-(meth)acryl copolymer and does not contain a wax, the polyester resin component to the total amount of the polyester resin component and the styrene-(meth)acryl copolymer is, for example, 10% by mass or more, preferably 20% by mass or more. Further, to the total amount of the polyester resin component and the styrene-(meth)acryl copolymer, the polyester resin component is, for example, 80% by mass or less, preferably 50% by mass or less. Furthermore, to the total amount of the polyester resin component and the styrene-(meth)acryl copolymer, the styrene-(meth)acryl copolymer is, for example, 20% by mass or more, preferably 50% by mass or more. Furthermore, to the total amount of the polyester resin component and the styrene-(meth)acryl copolymer, the styrene-(meth)acryl copolymer is, for example, 90% by mass or less, preferably 80% by mass or less.

Alternatively, when the aqueous coating agent contains a polyester resin component and a wax and does not contain a styrene-(meth)acryl copolymer, the polyester resin component to the total amount of the polyester resin component and the wax is, for example, 10% by mass or more, preferably 20% by mass or more. Further, to the total amount of the polyester resin component and the wax, the polyester resin component is, for example, 80% by mass or less, preferably 50% by mass or less. Furthermore, to the total amount of the polyester resin component and the wax, the wax is, for example, 20% by mass or more, preferably 50% by mass or more. Furthermore, to the total amount of the polyester resin component and the wax, the wax is, for example, 90% by mass or less, preferably 80% by mass or less.

Alternatively, when the aqueous coating agent contains a polyester resin component, a styrene-(meth)acryl copolymer, and a wax, the polyester resin component to the total amount of the polyester resin component, the styrene-(meth)acryl copolymer, and the wax is, for example, 10% by mass or more, preferably 20% by mass or more. Further, to the total amount of the polyester resin component, the styrene-(meth)acryl copolymer, and the wax, the polyester resin component is, for example, 90% by mass or less, preferably 80% by mass or less. Furthermore, to the total amount of the polyester resin component, the styrene-(meth)acryl copolymer, and the wax, the styrene-(meth)acryl copolymer is, for example, 10% by mass or more, preferably 20% by mass or more. Furthermore, to the total amount of the polyester resin component, the styrene-(meth)acryl copolymer, and the wax, the styrene-(meth)acryl copolymer is, for example, 90% by mass or less, preferably 80% by mass or less. Furthermore, to the total amount of the polyester resin component, the styrene-(meth)acryl copolymer, and the wax, the wax is, for example, 1% by mass or more, preferably 5% by mass or more. Furthermore, to the total amount of the polyester resin component, the styrene-(meth)acryl copolymer, and the wax, the wax is, for example, 20% by mass or less, preferably 10% by mass or less.

Further, the aqueous coating agent may contain a dispersant. The dispersant is an additive for stably dispersing the rosin-modified polyester resin in the aqueous medium. Examples of the dispersant include an anion surfactant, a non-ionic surfactant, a cationic surfactant, a polycarboxylic dispersant, a naphthalene condensation-based dispersant, an aliphatic alcohol sulfate-based dispersant, a polyester-based dispersant, a polyether-based dispersant, a vinyl polymer-based dispersant, an acethylene diol-based dispersant and a polyaminoamide-based dispersant. These can be used alone or in a combination of two or more. The blending amount of the dispersant is not especially limited, but appropriately set depending on the purpose and use.

Furthermore, the aqueous coating agent may contain a neutralizer. That is to say, the carboxyl group of the above-described polyester resin component can be neutralized with the neutralizer. The neutralization improves the stability of the rosin-modified polyester resin in the aqueous medium.

Examples of the neutralizer include a basic compound. Examples of the basic compound include ammonia, triethylamine, N,N-dimethylethanolamine, isopropylamine, aminoethanol, dimethylaminoethanol, diethylaminoethanol, ethylamine, diethylamine, isobutylamine, dipropylamine, 3-ethoxypropylamine, 3-diethylaminopropylamine, secbutylamine, propylamine, n-butylamine, 2-methoxyethylamine, 3-methoxypropylamine, 2,2-dimethoxyethylamine, monoethanolamine, morpholine, N-methyl morpholine, N-ethyl morpholine, pyrrol, and pyridine. These can be used alone or in a combination of two or more.

The blending amount of the neutralizer is not especially limited, but appropriately set depending on the purpose and use. More specifically, in view of the stability of the aqueous coating agent, the blending amount of the neutralizer to the carboxyl group of the rosin-modified polyester resin is, for example, 0.5-fold equivalent or more, preferably 0.8-fold equivalent or more. Further, in view of the stability of the aqueous coating agent, the blending amount of the neutralizer to the carboxyl group in the rosin-modified polyester resin is, for example, 30-fold equivalent or less, preferably 10-fold equivalent or less.

The aqueous coating agent may further contain an additive in an appropriate ratio. Examples of the additive include a filler, a thickener, a blowing agent, an antioxidant, a light-resistant stabilizer, a heat-resistant stabilizer, and a flame retardant. These can be used alone or in a combination of two or more.

Then, in the above-described aqueous coating agent, the acid value of the polyester resin component containing the rosin-modified polyester resin is in a predetermined range, and the hydroxyl value of the polyester resin component containing the rosin-modified polyester resin is in a predetermined range. Thus, the above-described aqueous coating agent can form a coating film having excellent oil resistance.

More specifically, to improve the oil resistance, the above-described polyester resin component has a relatively high acid value. However, when a relatively large amount of the α,β-unsaturated dicarboxylic acid is used to obtain a polyester resin component by a general esterification reaction in order to increase the acid value, gelatinization easily occurs in the esterification reaction.

In contrast, in the above-described method, the temperature condition for the esterification reaction is set relatively low. Thus, the gelatinization in the esterification reaction is suppressed. Particularly, setting the reaction temperature in the esterification reaction to the above-described upper limit or less suppresses the reaction of the tertiary carboxy group derived from the rosins (A), and enables the reaction of the carboxy group derived from the α,β-unsaturated dicarboxylic acid (B). Thus, with the above-described method, while the gelatinization is suppressed, a polyester resin component having a relatively high acid value can be obtained. Hence, the aqueous coating agent containing the above-described polyester resin component can form a coating film having excellent oil resistance.

The present invention includes an article including a coating film of the aqueous coating agent. More specifically, the article includes a substrate and a dried coating film of the aqueous coating agent formed on the substrate.

Examples of the substrate include a plastic film, a vapor-deposited film, a sheet of metal foil, a sheet of paper, a woven fabric, and a nonwoven fabric. As the substrate, a plastic film and a sheet of paper are preferable.

The above-described aqueous coating agent is applied to the substrate with a known method. Examples of the application method include a spray method, a curtain coater method, a flow coater method, a roll coater method, a blushing coating method, an immersion method, and a flexo-printing method.

Thereafter, the aqueous coating agent is dried with a known method. The drying condition may be natural drying at room temperature or heat drying. Heat drying is preferable. The drying temperature in heat drying is, for example, 40°C or more, preferably 50°C or more. Further, the drying temperature is, for example, 250°C or less, preferably 230°C or less. Furthermore, the drying time is, for example, 1 second or more, preferably 5 seconds or more. Furthermore, the drying time is, for example, 600 seconds or less, preferably 500 seconds or less.

In this manner, a dried coating film of the aqueous coating agent is obtained. As a result, an article including a substrate and the dried coating film is produced. Because including the coating film of the above-described aqueous coating agent, such an article has excellent oil resistance.

### Examples

The present invention is described next with reference to Examples and Comparative Examples. The present invention is, however, not limited to Examples in any way. The "parts" and "%" are based on mass unless otherwise specified. The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the upper limit values (numeral values defined with "or less", and "less than") or the lower limit values (numeral values defined with "or more", and "more than").

### <Measurement Method>

### (1) Acid Value

The acid value of the polyester resin component was measured in compliance with JIS K 5601-2-1 (1999).

### (2) Hydroxyl Value

The hydroxyl value of the polyester resin component was measured in compliance with JIS K 0070 (1992).

### (3) Content Ratio of Component Having Molecular Weight of 500 or Less

The content ratio of the component having a molecular weight of 500 or less was measured with the following method. That is, a 1.0 g/L sample was obtained by dissolving the polyester resin component in tetrahydrofuran. Next, using a gel permeation chromatograph (GPC) equipped with a differential refractive index detector (RID), the molecular weight distribution of the sample was obtained.

Thereafter, the content ratio of the component having a molecular weight of 500 or less was calculated from the obtained chromatogram (chart) using a standard polystyrene as the calibration curve. The measurement apparatus and measurement conditions are described below.

Data process device: Product number Agilent 1260 Infinity II (manufactured by Agilent)
Differential refractive index detector: an RI detector (G7162A) built in Product number Agilent 1260 Infinity II
Column: Product number PL gelmixed-B7.5 × 300 mm (manufactured by Agilent), three columns
Mobile phase: tetrahydrofuran
Column flow rate: 1.0 ml/min
Sample concentration: 2.0 g/L
Injected amount: 10 µL
Measurement temperature: 30°C
Molecular weight marker: Standard polystyrene (manufactured by Agilent using EasiCal Polystyrene Standards PS-1)

### Synthesis Example 1 (Resin 1)

While a nitrogen gas was blown into a four-neck flask equipped with an stirrer, a water separator-equipped reflux condenser, and a thermometer, 39.6 parts of gum rosin were inserted therein and the temperature was increased to 210°C. Next, 12.9 parts of fumaric acid were added to the flask and stirred at 210°C for about 30 minutes. In this manner, the Diels-Alder reaction of the gum rosin with the fumaric acid was carried out to produce a first product (first step).

Next, 24.3 parts of adipic acid and 23.2 parts of glycerin were added to the flask, and an esterification reaction of the contents of the flask was carried out at 190°C for about 8 hours. In this manner, a second product was produced (second step).

The second product was prepared as a polyester resin component (hereinafter, referred to as resin 1) containing a rosin-modified polyester resin. The resin 1 had an acid value of 125 mgKOH/g and a hydroxyl value of 134 mgKOH/g. Further, in the resin 1, the content ratio of the component having a molecular weight of 500 or less was 18% by mass.

### Synthesis Examples 9, 10, 14, 17, and 19 (Resins 9, 10, 14, 17, and 19)

Except that the formulation was changed according to Tables 1 to 4, resins 9, 10, 14, 17, and 19 were produced in the same manner as Synthesis Example 1. The conditions for the reaction were set according to Tables 1 to 4.

### Synthesis Example 2 (Resin 2)

While a nitrogen gas was being blown into a four-neck flask equipped with an stirrer, a water separator-equipped reflux condenser, and a thermometer, 17.8 parts of linseed oil (an iodine value of 180 mg/100 g), 18.1 parts of glycerin, and 0.1 parts of lithium acetate (catalyst) were inserted therein and the temperature was increased to 255°C. Next, the contents of the flask were stirred at 255°C for 3 hours. In this manner, the glycerin was modified with the linseed oil, thereby producing a linseed oil-modified glycerin (modification step).

Meanwhile, 37.5 parts of gum rosin were inserted in a four-neck flask equipped with a stirrer, a water separator-equipped reflux condenser, and a thermometer and the temperature was increased to 210°C. Next, 13.5 parts of fumaric acid were added to the flask, and stirred at 210°C for about 30 minutes. In this manner, the Diels-Alder reaction of the gum rosin and the fumaric acid was carried out, thereby producing a first product (first step).

Next, linseed oil-modified glycerin (35.9 parts in total) and 13.1 parts of adipic acid were added to the flask, and the esterification reaction of the contents of the flask was carried out at 190°C for about 8 hours. In this manner, a second product was produced (second step).

The second product was prepared as a polyester resin component (hereinafter referred to as resin 2) containing a rosin-modified polyester resin. The resin 2 had an acid value of 122 mgKOH/g and a hydroxyl value of 130 mgKOH/g. In the resin 2, the content ratio of the component having a molecular weight of 500 or less was 15% by mass.

### Synthesis Examples 3 to 8, 15 and 16 (Resins 3 to 8, 15, and 16)

Except that the formulation was changed according to Tables 1 to 4, in the same manner as Synthesis Example 2, resins 3 to 8, 15, and 16 were produced. The conditions for the reactions were set according to Tables 1 to 4.

### Synthesis Example 11 (Resin 11)

While a nitrogen gas was being blown into a four-neck flask equipped with a stirrer, a water separator-equipped reflux condenser, and a thermometer, 37.5 parts of gum rosin were inserted therein and the temperature was increased to 210°C. Next, 12.2 parts of fumaric acid was added to the flask, and stirred at 210°C for about 30 minutes. In this manner, the Diels-Alder reaction of the gum rosin and the fumaric acid was carried out, thereby producing a first product (first step).

Next, 12.1 parts of adipic acid, 19.7 parts of glycerin, and 18.5 parts of tall oil fatty acid (an iodine value of 140 mg/100 g) were added to the flask, and the esterification reaction of the contents of the flask was carried out at 190°C for about 8 hours. In this manner, a second product was produced (second step).

The second product was prepared as a polyester resin component (hereinafter referred to as resin 11) containing a rosin-modified polyester resin. The resin 11 had an acid value of 120 mgKOH/g and a hydroxyl value of 140 mg/KOH/g. In the resin 11, the content ratio of the component having a molecular weight of 500 or less was 21% by mass.

### Synthesis Examples 12, 13, and 18 (Resins 12, 13, and 18)

Except that the formulation was changed according to Tables 1 to 4, in the same manner as Synthesis Example 11, resins 12, 13, and 18 were produced. The conditions for the reactions were set according to according to Tables 1 to 4.

### Examples 1 to 16 and Comparative Examples 1 to 3

According to the formulations shown in Tables 1 to 4, the aqueous coating agents 1 to 16 were produced. In other words, 30 parts of resin, 10 parts of a 25% ammonia aqueous solution, and 60 parts of distilled water were inserted in a reflux pipe-equipped conical flask, and stirred at 70°C for about 2 hours. In this manner, the resin was neutralized, and dissolved, thereby producing an aqueous solution.

Further, each of the aqueous coating agents was coated on a 250 g/m paperboard using a 6 µm bar coater. Thereafter, each aqueous coating agent was dried, thereby producing a coating film of each aqueous coating agent. Further, articles (of coated paper) including the coating films of the aqueous coating agents were produced.

### <Oil Resistance Evaluation>

In compliance with Test Method TAPPI T559 cm-02 by Japan Technical Association of the Pulp and Paper Industry (TAPPI), using the standard "kit" test, the oil resistance of a surface of the article was evaluated. The evaluations are on a scale of 1 to 10. The article rated 3 or more was evaluated to have excellent oil resistance.

### <Styrene-(meth)acryl Copolymer>

### Production Example 1

104 parts of styrene, 17 parts of methacrylic acid, 34 parts of methacrylic acid n-butyl, 138 parts of acrylic acid 2-ethylhexyl, 52 parts of methacrylic acid methyl, and 2 parts of n-dodecylmercaptan as a chain transfer agent were mixed together, thereby producing a monomer composition. Further, separately from the above-described, 4 parts of potassium persulfate was dissolved in 256 parts of water, thereby preparing an aqueous solution of a polymerization initiator.

360 parts of water and 12 parts of sodium dodecyl benzene sulfonate (NEOPELEX G-25: manufactured by Kao Corporation) as an emulsifier were inserted in a four-neck flask equipped with an stirrer, a thermometer, a reflux condenser, a water separator, and a nitrogen inlet tube, and heated to 88°C while being stirred.

While a monomer composition and the polymerization initiator aqueous solution were continuously being inserted in the above-described flask for 6 hours each, the temperature was kept at 90°C or less to polymerize them. Thereafter the mixture was aged for 30 minutes. Next, the mixture was heated to 95°C to complete the polymerization, and then cooled to 40°C.

Thereafter, 1 part of 28% ammonia water was added to the above-described flask to neutralize the mixture, thereby producing an alkali salt aqueous solution of a styrene- (meth)acryl copolymer having a solid content concentration of 35.5% by mass and a viscosity of 21 mPa·s (25°C).

### Production Example 2

104 parts of styrene, 17 parts of methacrylic acid, 34 parts of methacrylic acid n-butyl, 138 parts of methacrylic acid 2- hydroxy ethyl, 52 parts of methacrylic acid methyl, and 2 parts of n-dodecylmercaptan as a chain transfer agent were mixed together, thereby producing a monomer composition.

Except for the above, in the same manner as Production Example 1, an alkali salt aqueous solution of a styrene·(meth)acryl copolymer having a solid content concentration of 35.2% by mass and a viscosity of 25 mPa·s (25°C).

### <Wax>

### Preparation Example 1

A commercially available wax emulsion (of which trade name is DIJET H, manufactured by GOO Chemical Co., Ltd.) was prepared.

### Examples 17 to 22

According to the formulations shown in Table 5, aqueous coating agents 17 to 22 were produced. In other words, the polyester resin component and styrene-(meth)acryl copolymer and/or a wax were mixed together so that the parts by mass of the solid contents were in accordance with Table 5, thereby producing resin mixtures.

Next, 30 parts of each resin mixture, 10 parts of a 25% ammonia aqueous solution, and 60 parts of distilled water were inserted in a reflux pipe-equipped conical flask, and stirred at 70°C for approximately 2 hours. In this manner, while being neutralized, the resin mixture was dissolved, thereby producing an aqueous solution. The solid content concentration, pH, and viscosity are shown in Table 5. In this manner, the aqueous coating agents 17 to 22 were produced.

Further, each aqueous coating agent was adjusted to have a temperature of 25°C and coated onto a 250 g/m paper board with a bar coater No. 22. Thereafter, the aqueous coating agent was dried, thereby producing a coating film of each aqueous coating agent. Further, an article (coated paper) including the coating film of each aqueous coating agent was produced. The adhering amount of the solid content (resin component) was 7 to 8 g/m².

The moisture of the coated paper was conditioned at a constant temperature and humidity environment (22°C, a relative humidity 50%). Thereafter, the coated paper was used for the evaluation of the oil resistance.

### <Evaluation of Oil Resistance>

In compliance with Test Method TAPPI T559 cm-02 by Japan Technical Association of the Pulp and Paper Industry (TAPPI), using the standard "kit" test, the oil resistance of a surface of the article was evaluated. The evaluations are on a scale of 1 to 12. The article rated 3 or more was evaluated to have excellent oil resistance.

### [Table 1]

**Table 1**

| No. | | | Example1 | Example2 | Example3 | Example4 | Example5 |
|---|---|---|---|---|---|---|---|
| | | | Synthesis Ex.1 | Synthesis Ex.2 | Synthesis Ex.3 | Synthesis Ex.4 | Synthesis Ex.5 |
| | | | Resin1 | Resin2 | Resin3 | Resin4 | Resin5 |
| Material component (Part(s) by mass) | (A)Rosins | Gum rosin | 39.6 | 37.5 | 39.2 | 55.2 | 34.6 |
| | (B)*α*,*β*-unsaturated dicarboxylic acid | Fumaric acid | 12.9 | 13.5 | - | 17.5 | 12.1 |
| | | Maleic anhydride | - | - | 11.0 | - | - |
| | | Itaconic acid | - | - | - | - | - |
| | (D)Oils and fats and/or fatty acid | Tall oil fatty acid | - | - | - | - | - |
| | | Linseed oil | - | 17.8 | 17.8 | 17.4 | 20.2 |
| | (C)Polyol | Glycerin | 23.2 | 18.1 | 189 | 9.9 | 18.5 |
| | | Ethylene glycol | - | - | - | - | - |
| | (E) Another carboxylic acid | Adipic acid | 24.3 | 13.1 | 13.1 | - | 14.6 |
| | | Succinic acid | - | - | - | - | - |
| | Total amount | | 100.0 | 100.0 | 100.0 | 100.0 | 100.0 |
| Molar amount of (B) α,*β*-unsaturated dicarboxylic acid to 100 moles of (A) rosins | | | 93 | 102 | 94 | 90 | 99 |
| Polyester resin component | Acid value | mgKOH/g | 125 | 122 | 125 | 115 | 86 |
| | Hydroxyl value | mgKOH/g | 134 | 130 | 142 | 30 | 123 |
| | Reaction temperature of first step | °C | 210 | 210 | 210 | 210 | 210 |
| | Reaction time of first step | Hour(s) | 0.5 | 0.5 | 0.5 | 0.5 | 0.5 |
| | Reaction temperature of second step | °C | 190 | 190 | 190 | 190 | 190 |
| | Reaction time of second step | Hour(s) | 8 | 8 | 8 | 8 | 8 |
| | Reaction temperature of modification step | °C | - | 255 | 255 | 255 | 255 |
| | Content amount of component having molecular weight of 500 or less | % by mass | 18 | 15 | 19 | 23 | 18 |
| Evaluation | Oil resistance | | 8 | 10 | 8 | 6 | 7 |

### [Table 2]

**Table 2**

| No. | | | Examples | Example7 | Example8 | Example9 | Example10 |
|---|---|---|---|---|---|---|---|
| | | | Synthesis Ex 6 | Synthesis Ex 7 | Synthesis Ex 8 | Synthesis Ex.9 | Synthesis Ex.10 |
| | | | Resin6 | Resin7 | Resin8 | Resin9 | Resin10 |
| Material component (Part(s) by mass) | (A)Rosins | Gum rosin | 27.5 | 38.7 | 35.2 | 34.1 | 45.2 |
| | (B) *α*,*β*-unsaturated dicarboxylic acid | Fumaric acid | 90 | 134 | 115 | 113 | 152 |
| | | Maleic anhydride | - | - | - | - | - |
| | | Itaconic acid | - | - | - | - | - |
| | (D)Oils and fats and/or fatty acid | Tall oil fatty acid | - | - | - | - | - |
| | | Linseed oil | 20.2 | 15.7 | 19.1 | - | - |
| | (C)Polyol | Glycerin | 17.5 | 12.8 | 170 | 23.3 | 17.0 |
| | | Ethylene glycol | 3.0 | 30 | - | - | - |
| | (E)Another carboxylic acid | Adipic acid | 156 | 135 | 130 | 282 | 22.6 |
| | | Succinic acid | 72 | 29 | 42 | 31 | - |
| | Total amount | | 100.0 | 100.0 | 100.0 | 100.0 | 100.0 |
| Molar amount of (B) *α*,*β*-unsaturated dicarboxylic acid to 100 moles of (A) rosins | | | 93 | 98 | 93 | 94 | 96 |
| Polyester resin component | Acid value | mgKOH/g | 65 | 65 | 152 | 175 | 175 |
| | Hydroxyl value | mgKOH/g | 124 | 30 | 155 | 177 | 120 |
| | Reaction temperature of first step | °C | 210 | 210 | 210 | 210 | 210 |
| | Reaction time of first step | Hour(s) | 0.5 | 0.5 | 0.5 | 0.5 | 0.5 |
| | Reaction temperature of second step | °C | 190 | 190 | 190 | 190 | 190 |
| | Reaction time of second step | Hour(s) | 8 | 11 | 7 | 6 | 7 |
| | Reaction temperature of modification step | °C | 255 | 255 | 255 | - | - |
| | Content amount of component having molecular weight of 500 or less | % by mass | 17 | 14 | 23 | 25 | 23 |
| Evaluation | Oil resistance | | 4 | 3 | 7 | 3 | 4 |

### [Table 3]

**Table 3**

| No. | | | Example 11 | Example12 | Examplel3 | Example 14 |
|---|---|---|---|---|---|---|
| | | | Synthesis Ex 11 | Synthesis Ex.12 | Synthesis Ex.13 | Synthesis Ex.14 |
| | | | Resin11 | Resin12 | Resin13 | Resin14 |
| Material component (Part(s) by mass) | (A)Rosins | Gum rosin | 37.5 | 28.5 | 36.5 | 396 |
| | (B)*α*,*β*-unsaturated dicarboxylic acid | Fumaric acid | 12.2 | 9.5 | - | 12.9 |
| | | Maleic anhydride | - | - | - | - |
| | | Itaconic acid | - | - | 13.0 | - |
| | (D)Oils and fats and/or fatty acid | Tall oil fatty acid | 18.5 | 34.6 | 18.5 | - |
| | | Linseed oil | - | - | - | - |
| | (C)Polyol | Glycerin | 19.7 | 16.3 | 18.9 | 23.2 |
| | | Ethylene glycol | - | - | - | - |
| | (E) Another carboxylic acid | Adipic acid | 12.1 | 11.1 | 13.1 | 24.3 |
| | | Succinic acid | - | - | - | - |
| | Total amount | | 100.0 | 100.0 | 100.0 | 100.0 |
| Molar amount of (B) *α*,*β*-unsaturated dicarboxylic acid to 100 moles of (A) rosins | | | 92 | 95 | 90 | 93 |
| Polyester resin component | Acid value | mgKOH/g | 120 | 120 | 110 | 105 |
| | Hydroxyl value | mgKOH/g | 140 | 140 | 130 | 110 |
| | Reaction temperature of first step | °C | 210 | 210 | 210 | 210 |
| | Reaction time of first step | Hour(s) | 0.5 | 0.5 | 0.5 | 0.5 |
| | Reaction temperature of second step | °C | 190 | 190 | 190 | 230 |
| | Reaction time of second step | Hour(s) | 8 | 9 | 8 | 5 |
| | Reaction temperature of modification step | °C | - | - | - | - |
| | Content amount of component having molecular weight of 500 or less | % by mass | 19 | 18 | 17 | 28 |
| Evaluation | Oil resistance | | 8 | 7 | 5 | 4 |

### [Table 4]

**Table 4**

| No. | | | Examplel5 | Example 16 | Comp. Ex.1 | Comp Ex.2 | Comp Ex_3 |
|---|---|---|---|---|---|---|---|
| | | | Synthesis Ex.15 | Synthesis Ex.16 | Synthesis Ex 17 | Synthesis Ex 18 | Synthesis Ex 19 |
| | | | Resin15 | Resin16 | Resin 17 | Resin18 | Resin19 |
| Material component (Part(s) by mass) | (A)Rosins | Gum rosin | 37.5 | 37.5 | 48.2 | 27.0 | 30.1 |
| | (B)*α*,*β*-unsaturated dicarboxylic acid | Fumaric acid | 80 | 210 | 16.6 | 9.0 | 9.8 |
| | | Maleic anhydride | - | - | - | - | - |
| | | Itaconic acid | - | - | - | - | - |
| | (D)Oils and fats and/or fatty acid | Tell oil fatty acid | - | - | - | 133 | - |
| | | Linseed oil | 17.8 | 17.6 | - | - | - |
| | (C)Polyol | Glycerin | 17.9 | 17.7 | 18.8 | 22.0 | 24.2 |
| | | Ethylene glycol | - | - | - | 46 | - |
| | (E)Another carboxylic acid | Adipic acid | 18.8 | 6.0 | 16.4 | 18.0 | 28.2 |
| | | Succinic acid | - | - | - | 6.1 | 7.7 |
| | Total amount | | 100.0 | 100.0 | 100.0 | 100.0 | 100.0 |
| Molar amount of (B) *α*.*β* -unsaturated dicarboxylic acid to 100 moles of (A) rosins | | | 61 | 159 | 98 | 95 | 93 |
| Polyester resin component | Acid value | mgKOH/g | 122 | 122 | 70 | 50 | 188 |
| | Hydroxyl value | mgKOH/g | 138 | 125 | 15 | 110 | 190 |
| | Reaction temperature of first step | °C | 210 | 210 | 210 | 210 | 210 |
| | Reaction time of first step | Hour(s) | 05 | 05 | 0 5 | 05 | 0.5 |
| | Reaction temperature of second step | °C | 190 | 190 | 190 | 190 | 190 |
| | Reaction time of second step | Hour(s) | 8 | 7 | 10 | 9 | 5 |
| | Reaction temperature of modification step | °C | 255 | 255 | - | - | - |
| | Content amount of component having molecular weight of 500 or less | % by mass | 29 | 17 | 22 | 17 | 31 |
| Evaluation | Oil resistance | | 3 | 3 | 2 | 2 | 1 |

### [Table 5]

**Table 5**

| No. | | Example17 | Example18 | Example 19 | Example20 | Example21 | Example22 |
|---|---|---|---|---|---|---|---|
| Polyester resin component | Type | Synthesis Ex. 10 | Synthesis Ex. 10 | Synthesis Ex. 16 | Synthesis Ex. 16 | Synthesis Ex. 10 | Synthesis Ex. 10 |
| | Parts by mass of solid content | 25 | 25 | 10 | 70 | 70 | 25 |
| Styrene-(meth)acryl copolymer | Type | Production Ex. 1 | Production Ex. 1 | Production Ex. 2 | Production Ex. 2 | Production Ex. 1 | - |
| | Parts by mass of solid content | 75 | 70 | 90 | 30 | 25 | - |
| Wax | Type | - | Preparation Ex. 1 | - | - | Preparation Ex. 1 | Preparation Ex. 1 |
| | Parts by mass of solid content | - | 5 | - | - | 5 | 75 |
| Solid content concentration | 94 by mass | 30.0 | 30.5 | 30.1 | 30.4 | 30.5 | 30.1 |
| Viscosity | mPa·s | 145 | 53 | 65 | 535 | 245 | 30 |
| pH | - | 5.5 | 5.6 | 5.2 | 6.4 | 5.4 | 6.5 |
| Evaluation | Oil resistance | 10 | 11 | 9 | 6 | 8 | 6 |

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### Industrial Applicability

The aqueous coating agent, article, and rosin-modified polyester resin production method of the present invention are suitably used in the field of coatings on various substrates.

## Claims

1. An aqueous coating agent comprising:
an aqueous medium; and
a polyester resin component,
wherein the polyester resin component contains a rosin-modified polyester resin that is a reaction product of a material component containing (A) rosins, (B) an α,β-unsaturated dicarboxylic acid, and (C) a polyol,
wherein the polyester resin component has an acid value of 60 mgKOH/g or more and 180 mgKOH/g or less, and
wherein the polyester resin component has a hydroxyl value of 20 mgKOH/g or more and 180 mgKOH/g or less.

2. The aqueous coating agent according to claim 1,
wherein in the material component, a content ratio of the α,β-unsaturated dicarboxylic acid (B) to 100 moles of the rosins (A) is 70 moles or more and 150 moles or less.

3. The aqueous coating agent according to claim 1,
wherein the α,β-unsaturated dicarboxylic acid (B) contains fumaric acid and/or maleic anhydride.

4. The aqueous coating agent according to claim 1,
wherein the material component further contains (D) oils and fats and/or fatty acid.

5. The aqueous coating agent according to claim 4,
wherein a content ratio of the oils and fats and/or fatty acid (D) to a total amount of the material component is 10% by mass or more and 30% by mass or less.

6. The aqueous coating agent according to claim 1, further comprising a styrene-(meth)acryl copolymer.

7. The aqueous coating agent according to claim 1, further comprising a wax.

8. An article comprising a coating film of the aqueous coating agent according to claim 1.

9. A method of producing a rosin-modified polyester resin, the method comprising:
a first step of allowing the rosins (A) to react with the α,β-unsaturated dicarboxylic acid (B) to produce a first product; and
a second step of allowing the first product to react with the polyol (C) after the first step to produce a second product,
wherein a reaction temperature in the second step is 230°C or less.

10. The method according to claim 9, further comprising:
a modification step of modifying the polyol (C) with the oils and fats and/or fatty acid (D) before the second step,
wherein a reaction temperature in the modification step is 230°C or more and 300°C or less.
